# EUROPEAN PATENT SPECIFICATION

(11) **EP 4 458 099 B1**
(45) Date of publication and mention of the grant of the patent: **27.05.2026**
(21) Application number: 23720983.8
(22) Date of filing: 04.04.2023
(51) Int. Cl.: H04W 74/0808, H04W 72/40

(54) **SELECTING A DESTINATION AS PART OF A LOGICAL CHANNEL PRIORITIZATION PROCEDURE**
AUSWAHL EINES ZIELS ALS TEIL EINES VERFAHRENS ZUR PRIORISIERUNG LOGISCHER KANÄLE
SÉLECTION D'UNE DESTINATION DANS LE CADRE D'UNE PROCÉDURE DE HIÉRARCHISATION DES CANAUX LOGIQUES

(30) Priority: 04.04.2022 US 202263327069 P
(43) Date of publication of application: 06.11.2024
(73) Proprietor: Lenovo (Singapore) Pte. Ltd., Singapore 556741 (SG)
(72) Inventor: GOLITSCHEK EDLER VON ELBWART, Alexander, 64285 Darmstadt (DE); LÖHR, Joachim, 65203 Wiesbaden (DE)
(74) Representative: Openshaw & Co.
(86) International application number: PCT/IB2023/053434
(87) International publication number: WO 2023/194914

(56) References cited:
- WO-A1-2021/255673
- WO-A1-2022/031648
- US-A1- 2021 136 810
- LG ELECTRONICS INC (RAPPORTEUR): "Summary of contributions to MAC for 5G V2X with NR Sidelink", vol. RAN WG2, no. Online; 20200224 - 20200306, 24 February 2020 (2020-02-24), XP052357010, Retrieved from the Internet <URL:https://ftp.3gpp.org/tsg_ran/WG2_RL2/TSGR2_109_e/Docs/R2-2001962.zip R2-2001962 Pre109e summary of AI 6.4.3.1 for NR V2X MAC.doc> [retrieved on 20200224]
- "3rd Generation Partnership Project; Technical Specification Group Radio Access Network; NR; Medium Access Control (MAC) protocol specification (Release 16)", vol. RAN WG2, no. V16.6.0, 27 September 2021 (2021-09-27), pages 1 - 158, XP052056847, Retrieved from the Internet <URL:https://ftp.3gpp.org/Specs/archive/38_series/38.321/38321-g60.zip 38321-g60.docx> [retrieved on 20210927]

## Description

### FIELD

The subject matter disclosed herein relates generally to wireless communications and more particularly relates to selecting a destination as part of a logical channel prioritization ("LCP") procedure.

### BACKGROUND

In certain wireless communications networks, a channel occupancy time ("COT") may be used. The COT may include sharing information. US 2021/0136810 A1 discloses a first device that performs sidelink communication with one or more destinations. The first device receives and/or selects a sidelink grant associated with a sidelink transmission. Responsive to the sidelink grant, the first device selects a first destination of the one or more destinations based upon a report signaling. The first device performs the sidelink transmission associated with the sidelink grant to the first destination.

### BRIEF SUMMARY

The invention is defined by the appended claims. As defined by claim 1, the invention provides a User Equipment, UE, for wireless communications, the UE comprising: at least one memory; and at least one processor coupled with the at least one memory and configured to cause the UE to: select a destination from a plurality of destinations for a transmission as part of a logical channel prioritization, LCP, procedure: wherein a first priority for a first destination of the plurality of destinations for the transmission in a shared channel occupancy time, COT, has a higher priority than a second priority of a plurality of priorities for a second destination of the plurality of destinations for the transmission that is not in a shared COT; wherein the transmission comprises one or more of a medium access control, MAC, control element, CE, MAC CE, or a logical channel with a highest priority of the plurality of priorities; and wherein the selected destination has the highest priority of the plurality of priorities. Preferred embodiments of the UE of claim 1 are defined by claims 2 to 6.

As defined by claim 7, the invention provides a method for wireless communication performed by a user equipment, UE, the method comprising: selecting a destination from a plurality of destinations for a transmission as part of a logical channel prioritization, LCP, procedure: wherein a first priority for a first destination of the plurality of destinations for the transmission in a shared channel occupancy time, COT, has a higher priority than a second priority of a plurality of priorities for a second destination of the plurality of destinations for the transmission that is not in a shared COT; wherein the transmission comprises one or more of a medium access control, MAC, control element, CE, MAC CE, or a logical channel with a highest priority of the plurality of priorities; and wherein the selected destination has the highest priority of the plurality of priorities. Preferred embodiments of the method of claim 7 are defined by claims 8 to 11.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for selecting a destination as part of a LCP procedure;
Figure 2 is a schematic block diagram illustrating one embodiment of an apparatus that may be used for selecting a destination as part of a LCP procedure;
Figure 3 is a schematic block diagram illustrating one embodiment of an apparatus that may be used for selecting a destination as part of a LCP procedure;
Figure 4 is a schematic block diagram illustrating one embodiment of a system for selecting a destination as part of a LCP procedure;
Figure 5 is a flow chart diagram illustrating one embodiment of a method for selecting a destination as part of a LCP procedure; and
Figure 6 is a flow chart diagram illustrating another embodiment of a method for selecting a destination as part of a LCP procedure.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Certain of the functional units described in this specification may be labeled as modules, in order to more particularly emphasize their implementation independence. For example, a module may be implemented as a hardware circuit comprising custom very-large-scale integration ("VLSI") circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but may include disparate instructions stored in different locations which, when joined logically together, include the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be any number of lines and may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. The code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

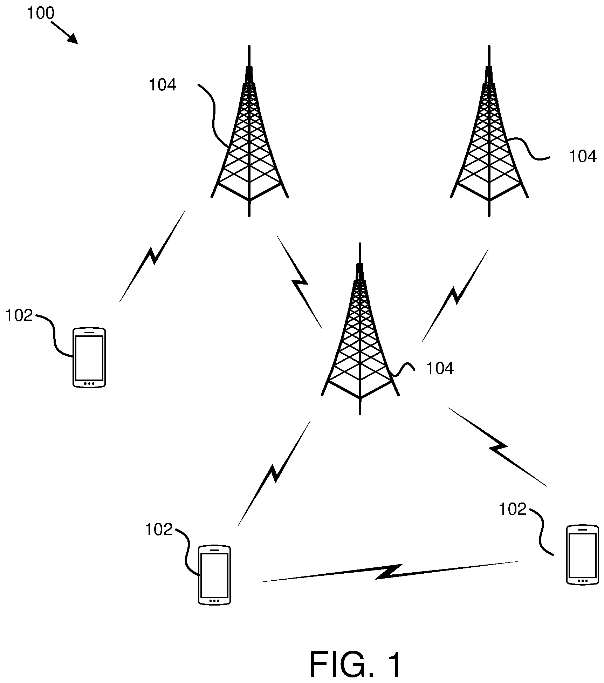

Figure 1 depicts an embodiment of a wireless communication system 100 for selecting a destination as part of a LCP procedure. In one embodiment, the wireless communication system 100 includes remote units 102 and network units 104. Even though a specific number of remote units 102 and network units 104 are depicted in Figure 1, one of skill in the art will recognize that any number of remote units 102 and network units 104 may be included in the wireless communication system 100.

In one embodiment, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), aerial vehicles, drones, or the like. In some embodiments, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, UE, user terminals, a device, or by other terminology used in the art. The remote units 102 may communicate directly with one or more of the network units 104 via uplink ("UL") communication signals. In certain embodiments, the remote units 102 may communicate directly with other remote units 102 via sidelink communication.

The network units 104 may be distributed over a geographic region. In certain embodiments, a network unit 104 may also be referred to and/or may include one or more of an access point, an access terminal, a base, a base station, a location server, a core network ("CN"), a radio network entity, a Node-B, an evolved node-B ("eNB"), a 5G node-B ("gNB"), a Home Node-B, a relay node, a device, a core network, an aerial server, a radio access node, an access point ("AP"), new radio ("NR"), a network entity, an access and mobility management function ("AMF"), a unified data management ("UDM"), a unified data repository ("UDR"), a UDM/UDR, a policy control function ("PCF"), a radio access network ("RAN"), a network slice selection function ("NSSF"), an operations, administration, and management ("OAM"), a session management function ("SMF"), a user plane function ("UPF"), an application function, an authentication server function ("AUSF"), security anchor functionality ("SEAF"), trusted non-third generation partnership project ("3GPP") gateway function ("TNGF"), or by any other terminology used in the art. The network units 104 are generally part of a radio access network that includes one or more controllers communicably coupled to one or more corresponding network units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with NR protocols standardized in 3GPP, wherein the network unit 104 transmits using an orthogonal frequency division multiplexing ("OFDM") modulation scheme on the downlink ("DL") and the remote units 102 transmit on the UL using a single-carrier frequency division multiple access ("SC-FDMA") scheme or an OFDM scheme. More generally, however, the wireless communication system 100 may implement some other open or proprietary communication protocol, for example, WiMAX, institute of electrical and electronics engineers ("IEEE") 802.11 variants, global system for mobile communications ("GSM"), general packet radio service ("GPRS"), universal mobile telecommunications system ("UMTS"), long term evolution ("LTE") variants, code division multiple access 2000 ("CDMA2000"), Bluetooth^{®}, ZigBee, Sigfox, among other protocols. The present disclosure is not intended to be limited to the implementation of any particular wireless communication system architecture or protocol.

The network units 104 may serve a number of remote units 102 within a serving area, for example, a cell or a cell sector via a wireless communication link. The network units 104 transmit DL communication signals to serve the remote units 102 in the time, frequency, and/or spatial domain.

In various embodiments, a remote unit 102 may select, at a UE, a destination from a plurality of destinations for a transmission as part of a LCP procedure. The transmission includes a MAC CE, a logical channel with a highest priority of a plurality of priorities, or a combination thereof; a first priority for a first destination of the plurality of destinations of the transmission is in a shared COT has a higher priority than a second priority of the plurality of priorities for a second destination of the plurality of destinations of the transmission is not in a shared COT; and the selected destination has the highest priority of the plurality of destination priorities. Accordingly, the remote unit 102 may be used for selecting a destination as part of a LCP procedure.

In certain embodiments, a network unit 104 may receive, at a network device, a transmission at a destination from a plurality of destinations selected as part of a LCP procedure. The transmission includes a MAC CE, a logical channel with a highest priority of a plurality of priorities, or a combination thereof; a first priority for a first destination of the plurality of destinations of the transmission is in a shared COT has a higher priority than a second priority of the plurality of priorities for a second destination of the plurality of destinations of the transmission is not in a shared COT; and the selected destination has the highest priority of the plurality of destination priorities. Accordingly, the network unit 104 may be used for selecting a destination as part of a LCP procedure.

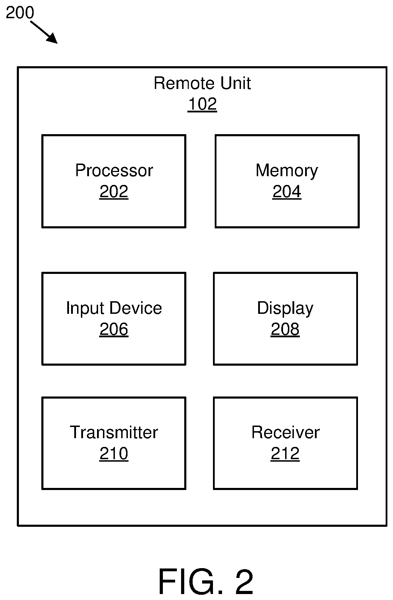

Figure 2 depicts one embodiment of an apparatus 200 that may be used for selecting a destination as part of a LCP procedure. The apparatus 200 includes one embodiment of the remote unit 102. Furthermore, the remote unit 102 may include a processor 202, a memory 204, an input device 206, a display 208, a transmitter 210, and a receiver 212. In some embodiments, the input device 206 and the display 208 are combined into a single device, such as a touchscreen. In certain embodiments, the remote unit 102 may not include any input device 206 and/or display 208. In various embodiments, the remote unit 102 may include one or more of the processor 202, the memory 204, the transmitter 210, and the receiver 212, and may not include the input device 206 and/or the display 208.

The processor 202, in one embodiment, may include any known controller capable of executing computer-readable instructions and/or capable of performing logical operations. For example, the processor 202 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 202 executes instructions stored in the memory 204 to perform the methods and routines described herein. The processor 202 is communicatively coupled to the memory 204, the input device 206, the display 208, the transmitter 210, and the receiver 212.

The memory 204, in one embodiment, is a computer readable storage medium. In some embodiments, the memory 204 includes volatile computer storage media. For example, the memory 204 may include a RAM, including dynamic RAM ("DRAM"), synchronous dynamic RAM ("SDRAM"), and/or static RAM ("SRAM"). In some embodiments, the memory 204 includes non-volatile computer storage media. For example, the memory 204 may include a hard disk drive, a flash memory, or any other suitable non-volatile computer storage device. In some embodiments, the memory 204 includes both volatile and non-volatile computer storage media. In some embodiments, the memory 204 also stores program code and related data, such as an operating system or other controller algorithms operating on the remote unit 102.

The input device 206, in one embodiment, may include any known computer input device including a touch panel, a button, a keyboard, a stylus, a microphone, or the like. In some embodiments, the input device 206 may be integrated with the display 208, for example, as a touchscreen or similar touch-sensitive display. In some embodiments, the input device 206 includes a touchscreen such that text may be input using a virtual keyboard displayed on the touchscreen and/or by handwriting on the touchscreen. In some embodiments, the input device 206 includes two or more different devices, such as a keyboard and a touch panel.

The display 208, in one embodiment, may include any known electronically controllable display or display device. The display 208 may be designed to output visual, audible, and/or haptic signals. In some embodiments, the display 208 includes an electronic display capable of outputting visual data to a user. For example, the display 208 may include, but is not limited to, a liquid crystal display ("LCD"), a light emitting diode ("LED") display, an organic light emitting diode ("OLED") display, a projector, or similar display device capable of outputting images, text, or the like to a user. As another, non-limiting, example, the display 208 may include a wearable display such as a smart watch, smart glasses, a heads-up display, or the like. Further, the display 208 may be a component of a smart phone, a personal digital assistant, a television, a table computer, a notebook (laptop) computer, a personal computer, a vehicle dashboard, or the like.

In certain embodiments, the display 208 includes one or more speakers for producing sound. For example, the display 208 may produce an audible alert or notification (e.g., a beep or chime). In some embodiments, the display 208 includes one or more haptic devices for producing vibrations, motion, or other haptic feedback. In some embodiments, all or portions of the display 208 may be integrated with the input device 206. For example, the input device 206 and display 208 may form a touchscreen or similar touch-sensitive display. In other embodiments, the display 208 may be located near the input device 206.

In certain embodiments, the processor 202 selects a destination from a plurality of destinations for a transmission as part of a LCP procedure. The transmission includes a MAC CE, a logical channel with a highest priority of a plurality of priorities, or a combination thereof; a first priority for a first destination of the plurality of destinations of the transmission is in a shared COT has a higher priority than a second priority of the plurality of priorities for a second destination of the plurality of destinations of the transmission is not in a shared COT; and the selected destination has the highest priority of the plurality of destination priorities.

Although only one transmitter 210 and one receiver 212 are illustrated, the remote unit 102 may have any suitable number of transmitters 210 and receivers 212. The transmitter 210 and the receiver 212 may be any suitable type of transmitters and receivers. In one embodiment, the transmitter 210 and the receiver 212 may be part of a transceiver.

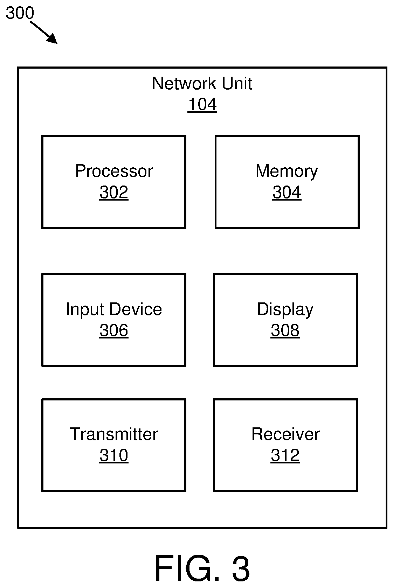

Figure 3 depicts one embodiment of an apparatus 300 that may be used for selecting a destination as part of a LCP procedure. The apparatus 300 includes one embodiment of the network unit 104. Furthermore, the network unit 104 may include a processor 302, a memory 304, an input device 306, a display 308, a transmitter 310, and a receiver 312. As may be appreciated, the processor 302, the memory 304, the input device 306, the display 308, the transmitter 310, and the receiver 312 may be substantially similar to the processor 202, the memory 204, the input device 206, the display 208, the transmitter 210, and the receiver 212 of the remote unit 102, respectively.

In certain embodiments, the receiver 312 receives a transmission at a destination from a plurality of destinations selected as part of a LCP procedure. The transmission includes a MAC CE, a logical channel with a highest priority of a plurality of priorities, or a combination thereof; a first priority for a first destination of the plurality of destinations of the transmission is in a shared COT has a higher priority than a second priority of the plurality of priorities for a second destination of the plurality of destinations of the transmission is not in a shared COT; and the selected destination has the highest priority of the plurality of destination priorities.

It should be noted that one or more embodiments described herein may be combined into a single embodiment.

In certain embodiments, new radio ("NR") provides mechanisms for operation in an unlicensed spectrum to share a COT with another device. The benefit of such COT sharing is that a device initiating a COT can grant another device the right to use the initiated COT without requiring the target device to initiate its own COT. Initiating a COT may involve a certain sensing time before transmissions are allowed, while starting transmission in a shared COT requires no such sensing or only a fraction of the sensing time required for initiating a COT.

In some embodiments, in cellular topology with a centralized scheduler, a gNB initiates a COT and may share this COT with one or more UEs, or a UE initiates a COT and may share this COT with a gNB. The sharing of a COT may be indicated by a specific field in downlink control information or uplink control information.

In various embodiments, such as in a sidelink environment, a UE may have sidelink connections to and from multiple UEs. Consequently, a UE may receive COT sharing indicators from a plurality of UEs (and potentially from a gNB as well). Since COT sharing allows a shorter or no required channel sensing time for a clear channel assessment, there is a benefit for a UE to select transmissions that can exploit COT sharing, especially if mission-critical data is to be transmitted.

In certain embodiments, a UE may include COT sharing information as part of a LCP procedure when determining a target UE and corresponding data for transmissions.

In some embodiments, COT sharing is possible from a gNB and/or an eNB to a UE, or vice versa from a UE to a gNB and/or an eNB. If an eNB and/or a gNB intends to share its initiated COT with one or more UEs, a common downlink control information ("DCI") format (e.g., DCI format 2_0 in NR) may include a COT sharing indicator field that would be set to 1 to indicate COT sharing. Additional fields may be present to explicitly indicate the remaining COT duration.

In some embodiments, COT sharing is possible from a UE to another UE. If a UE intends to share its initiated COT with one or more UEs, a sidelink control information ("SCI") format may include a COT sharing indicator field that would be set to 1 to indicate COT sharing. Additional fields may be present to explicitly indicate the remaining COT duration.

In various embodiments, such as in an LCP procedure, a criterion for selecting a destination only takes into account whether data for a potential destination includes a medium access control ("MAC") control element ("CE") or a logical channel with a highest priority. For multiple potential destinations have the same highest priority, an implementation device may choose which destination to select. In certain embodiments, an implementation may choose a destination for which a transmission can benefit from COT sharing.

In some embodiments, a sidelink LCP procedure is applied whenever a new transmission is performed. In such embodiments, RRC controls scheduling of sidelink data by signaling for each logical channel: 1) sl-Priority where an increasing priority value indicates a lower priority level; 2) sl-PrioritisedBitRate which sets the sidelink prioritized bit rate ("sPBR"); and/or 3) sl-BucketSizeDuration which sets the sidelink bucket size duration ("sBSD").

In various embodiments, RRC controls an LCP procedure by configuring mapping restrictions for each logical channel: 1) sl-configuredGrantType1Allowed which sets whether a configured grant Type 1 can be used for sidelink transmission; 2) sl-AllowedCG-List which sets the allowed configured grant(s) for sidelink transmission; and/or 3) sl-HARQ-FeedbackEnabled which sets whether the logical channel is allowed to be multiplexed with logical channels with sl-HARQ-FeedbackEnabled set to enabled or disabled. In certain embodiments, the following UE variable is used for an LCP procedure: SBj which is maintained for each logical channel j.

In some embodiments, a MAC entity may initialize SBj of the logical channel to zero when a logical channel is established. For each logical channel j, the MAC entity may: 1) increment SBj by the product sPBR × T before every instance of the LCP procedure, where T is the time elapsed since SBj was last incremented; and/or 2) if the value of SBj is greater than the sidelink bucket size (e.g., sPBR × sBSD): set SBj to the sidelink bucket size. The exact moments when the UE updates SBj between LCP procedures may be up to UE implementation as long as SBj is up to date at the time when a grant is processed by the LCP.

In various embodiments, a MAC entity may, for each sidelink control information ("SCI") corresponding to a new transmission: 1) select a destination associated to one of unicast, groupcast and broadcast, having at least one of the MAC CE and the logical channel with the highest priority, among the logical channels that satisfy all the following conditions and MAC CEs, if any, for the sidelink ("SL") grant associated with the SCI: a) SL data is available for transmission, b) SBj > 0, in case there is any logical channel having SBj > 0, c) sl-configuredGrantType1Allowed, if configured, is set to true if the SL grant is a configured grant Type 1, d) sl-AllowedCG-List, if configured, includes the configured grant index associated with the SL grant, and e) sl-HARQ-FeedbackEnabled is set to disabled, if a physical sidelink feedback channel ("PSFCH") is not configured for the SL grant associated to the SCI (e.g., if multiple destinations have the logical channels satisfying all conditions above with the same highest priority or if multiple destinations have either the MAC CE and/or the logical channels satisfying all conditions above with the same priority as the MAC CE, which destination is selected among them may be up to UE implementation); 2) select the logical channels satisfying all the following conditions among the logical channels belonging to the selected destination: a) SL data is available for transmission, b) sl-configuredGrantType 1Allowed, if configured, is set to true if the SL grant is a configured grant Type 1, and c) sl-AllowedCG-List, if configured, includes the configured grant index associated with the SL grant, c1) if a PSFCH is configured for the sidelink grant associated with the SCI: c1a) sl-HARQ-FeedbackEnabled is set to enabled if sl-HARQ-FeedbackEnabled is set to enabled for the highest priority logical channel satisfying the above conditions, or c1b) sl-HARQ-FeedbackEnabled is set to disabled if sl-HARQ-FeedbackEnabled is set to disabled for the highest priority logical channel satisfying the above conditions, c2) else: sl-HARQ-FeedbackEnabled is set to disabled. sl-HARQ-FeedbackEnabled is set to disabled for the transmission of a MAC PDU only carrying CSI reporting MAC CE.

In certain embodiment, when determining a destination as part of an LCP procedure, the selection is based at least in part on the information whether a transmission to a destination can benefit from COT sharing. Whether a transmission can benefit from COT sharing can be determined, for example, by checking whether a destination has indicated COT sharing for a transmission time unit for which the LCP procedure is executed.

In a first embodiment, when determining a destination as part of an LCP procedure for a sidelink transmission over an unlicensed carrier, one condition is that the transmission to the destination is indicated to be in a shared COT. The steps outlined in an LCP procedure may be as shown in Table 1.

**Table 1**

| | | |
|---|---|---|
| The MAC entity shall for each SCI corresponding to a new transmission: | | |
| | 1> select a Destination associated to one of unicast, groupcast and broadcast, having at least one of the MAC CE and the logical channel with the highest priority, among the logical channels that satisfy all the following conditions and MAC CE(s), if any, for the SL grant associated to the SCI: | |
| | | 2> SL data is available for transmission; and |
| | | 2*> SBj >* 0, in case there is any logical channel having *SBj >* 0*;* and |
| | | 2> *sl-configuredGrantType1Allowed,* if configured, is set to *true* in case the SL grant is a Configured Grant Type 1; and |
| | | 2*> sl-AllowedCG-List,* if configured, includes the configured grant index associated to the SL grant; and |
| | | *2> sl-HARQ-FeedbackEnabled* is set to *disabled,* if PSFCH is not configured for the SL grant associated to the SCI; and |
| | | 2> if the transmission to the destination ID associated with the SL grant occurs on a channel with shared spectrum access, the transmission to the destination is indicated to be in a shared COT. |

In certain embodiments, the steps outlined in an LCP procedure may be as shown in Table 2.

**Table 2**

| | | |
|---|---|---|
| The MAC entity shall for each SCI corresponding to a new transmission: | | |
| | 1> select a Destination associated to one of unicast, groupcast and broadcast, for which the transmission occasion is indicated to be in a shared COT, and having at least one of the MAC CE and the logical channel with the highest priority, among the logical channels that satisfy all the following conditions and MAC CE(s), if any, for the SL grant associated to the SCI: | |
| | | 2> SL data is available for transmission; and |
| | | 2*> SBj >* 0, in case there is any logical channel having *SBj >* 0; and |
| | | 2*> sl-configuredGrantType1Allowed,* if configured, is set to *true* in case the SL grant is a Configured Grant Type 1; and |
| | | 2> *sl-AllowedCG-List,* if configured, includes the configured grant index associated to the SL grant; and |
| | | 2*> sl-HARQ-FeedbackEnabled* is set to *disabled,* if PSFCH is not configured for the SL grant associated to the SCI. |

In a first variant of the first embodiment, an additional condition is that the UE is configured to include COT sharing as a criterion in the LCP procedure. For example, an RRC parameter sl-COTSharingRequired determines whether COT sharing is a condition. The steps outlined in the LCP procedure may be as shown in Table 3.

**Table 3**

| | | |
|---|---|---|
| The MAC entity shall for each SCI corresponding to a new transmission: | | |
| | 1> select a Destination associated to one of unicast, groupcast and broadcast, having at least one of the MAC CE and the logical channel with the highest priority, among the logical channels that satisfy all the following conditions and MAC CE(s), if any, for the SL grant associated to the SCI: | |
| | | 2> SL data is available for transmission; and |
| | | 2*> SBj >* 0, in case there is any logical channel having *SBj >* 0; and |
| | | 2*> sl-configuredGrantType1Allowed,* if configured, is set to *true* in case the SL grant is a Configured Grant Type 1; and |
| | | 2*> sl-AllowedCG-List,* if configured, includes the configured grant index associated to the SL grant; and |
| | | 2*> sl-HARQ-FeedbackEnabled* is set to *disabled,* if PSFCH is not configured for the SL grant associated to the SCI; and |
| | | 2> if *sl-COTSharingRequired* is configured and set to *true,* and if the transmission to the destination ID associated with the SL grant occurs on a channel with shared spectrum access, the transmission to the destination is indicated to be in a shared COT. |

In a second embodiment, a criterion of whether COT sharing with a destination is possible is applied as an additional selection criterion if multiple destinations have the logical channels satisfying all conditions with the same highest priority or if multiple destinations have either a MAC CE and/or logical channels satisfying all conditions above with the same priority as the MAC CE. The steps outlined in the LCP procedure may be as shown in Table 4.

**Table 4**

| | | |
|---|---|---|
| The MAC entity shall for each SCI corresponding to a new transmission: | | |
| | 1> select a Destination associated to one of unicast, groupcast and broadcast, having at least one of the MAC CE and the logical channel with the highest priority, among the logical channels that satisfy all the following conditions and MAC CE(s), if any, for the SL grant associated to the SCI: | |
| | | 2> SL data is available for transmission; and |
| | | 2*> SBj >* 0, in case there is any logical channel having *SBj >* 0; and |
| | | 2*> sl-configuredGrantType1Allowed,* if configured, is set to *true* in case the SL grant is a Configured Grant Type 1; and |
| | | 2*> sl-AllowedCG-List,* if configured, includes the configured grant index associated to the SL grant; and |
| | | 2*> sl-HARQ-FeedbackEnabled* is set to *disabled,* if PSFCH is not configured for the SL grant associated to the SCI. |
| If multiple Destinations have the logical channels satisfying all conditions above with the same highest priority or if multiple Destinations have either the MAC CE and/or the logical channels satisfying all conditions above with the same priority as the MAC CE, and if the SL transmission occurs on a channel with shared spectrum access, select a Destination for which the transmission associated with the SL grant is indicated to be in a shared COT. | | |

In the first embodiment, if multiple destinations have the logical channels satisfying all conditions with the same highest priority or if multiple destinations have either the MAC CE and/or the logical channels satisfying all conditions with the same priority as the MAC CE, which destination is selected among them may be up to UE implementation.

In a first variant of the second embodiment, an additional condition may be that the UE is configured to include COT sharing as a criterion in the LCP procedure. For example, an RRC parameter sl-COTSharingRequired determines whether COT sharing is a condition. The steps outlined in the LCP procedure may be as shown in Table 5.

**Table 5**

| | | |
|---|---|---|
| The MAC entity shall for each SCI corresponding to a new transmission: | | |
| | 1> select a Destination associated to one of unicast, groupcast and broadcast, having at least one of the MAC CE and the logical channel with the highest priority, among the logical channels that satisfy all the following conditions and MAC CE(s), if any, for the SL grant associated to the SCI: | |
| | | 2> SL data is available for transmission; and |
| | | *2> SBj >* 0, in case there is any logical channel having *SBj >* 0; and |
| | 2*> sl-configuredGrantType1Allowed,* if configured, is set to *true* in case the SL grant is a Configured Grant Type 1; and | |
| | 2*> sl-AllowedCG-List,* if configured, includes the configured grant index associated to the SL grant; and | |
| | 2*> sl-HARQ-FeedbackEnabled* is set to *disabled,* if PSFCH is not configured for the SL grant associated to the SCI. | |
| If multiple Destinations have the logical channels satisfying all conditions above with the same highest priority or if multiple Destinations have either the MAC CE and/or the logical channels satisfying all conditions above with the same priority as the MAC CE, and if the SL transmission occurs on a channel with shared spectrum access, and if *sl-COTSharingRequired* is configured and set to *true,* select a Destination for which the transmission associated with the SL grant is indicated to be in a shared COT. | | |

In this variant, if multiple destinations have the logical channels satisfying all conditions with the same highest priority or if multiple destinations have either the MAC CE and/or the logical channels satisfying all conditions with the same priority as the MAC CE, which destination is selected among them may be up to UE implementation.

In a third embodiment, a transmission to a destination which is indicated to be in a shared COT applies an offset level to the logical channel priority when determining the highest priority. Generally, the applied offset level can be any pre-determined number. Since, in certain embodiments in 3GPP, the logical channel priority value 1 is considered the highest priority and larger logical channel priority values reflect a lower priority, the offset level applied to the logical channel priority value for a transmission to a destination which is indicated to be in a shared COT is expressed as a negative number. For example, a logical channel priority is increased by 1 level if the transmission to the destination corresponding to the logical channel is indicated to be in a shared COT (e.g., the applied offset value is -1 to decrease the priority value). This modified logical channel priority level is then used to determine the highest priority of the logical channels as part of the LCP procedure. In some embodiments, the offset value is applied to the priority of the logical channel with the highest priority (e.g., as a first step from all logical channels for the same destination the highest priority is determined), then as a second step this highest priority value applies the offset if the transmission to the destination is indicated to be in a shared COT, and in a third step the destination is selected that has the highest resulting priority.

According to a first variant of the third embodiment, the applied offset value is a configurable value. For example, RRC configuration indicates the applicable offset value. According to a second variant of the third embodiment, whether the offset value is applied is dependent on the packet delay budget of the data in the logical channel.

According to a third variant of the third embodiment, whether the offset value is applied is a configurable behavior. For example, RRC configuration indicates whether the offset value is applied. A specific implementation is applying an offset value of 0. For that purpose, configuring the applicable offset value to 0 according to the first variant of the third embodiment is a specific implementation of the third variant of the third embodiment.

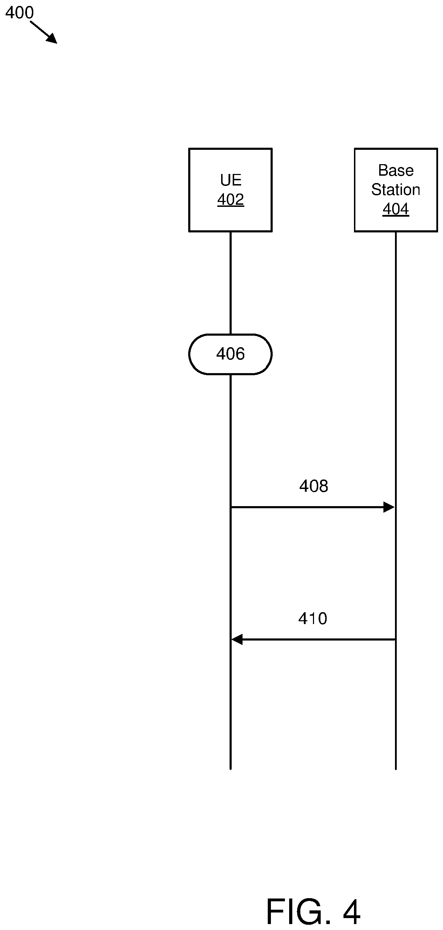

Figure 4 is a schematic block diagram illustrating one embodiment of a system 400 for selecting a destination as part of a LCP procedure. The system 400 includes a UE 402 and a base station 404. Each of the communications in the system 400 may include one or more messages. The UE 402 selects 406 a destination from a plurality of destinations for a transmission as part of a LCP procedure. The transmission includes a MAC CE, a logical channel with a highest priority of a plurality of priorities, or a combination thereof; a first priority for a first destination of the plurality of destinations of the transmission is in a shared COT has a higher priority than a second priority of the plurality of priorities for a second destination of the plurality of destinations of the transmission is not in a shared COT; and the selected destination has the highest priority of the plurality of destination priorities. In a first communication 408, the UE 402 transmits a transmission to the selected destination. Moreover, in a second communication 410, the base station 404 transmits a configuration indicating whether to apply an offset value to a logical channel priority in response to the transmission being in a shared COT to the UE 402.

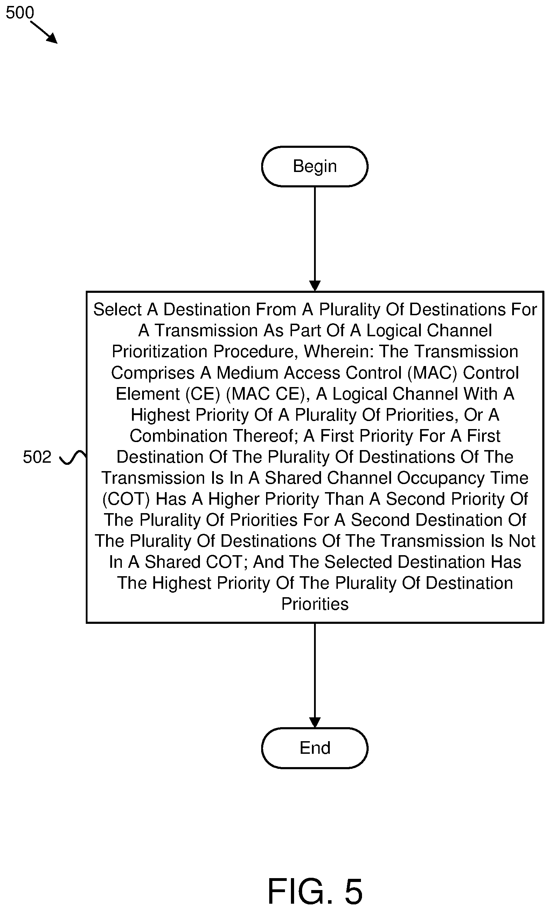

Figure 5 is a flow chart diagram illustrating one embodiment of a method 500 for selecting a destination as part of a LCP procedure. In some embodiments, the method 500 is performed by an apparatus, such as the remote unit 102. In certain embodiments, the method 500 may be performed by a processor executing program code, for example, a microcontroller, a microprocessor, a CPU, a GPU, an auxiliary processing unit, a FPGA, or the like.

In various embodiments, the method 500 includes selecting 502, at a UE, a destination from a plurality of destinations for a transmission as part of a LCP procedure. The transmission includes a MAC CE, a logical channel with a highest priority of a plurality of priorities, or a combination thereof; a first priority for a first destination of the plurality of destinations of the transmission is in a shared COT has a higher priority than a second priority of the plurality of priorities for a second destination of the plurality of destinations of the transmission is not in a shared COT; and the selected destination has the highest priority of the plurality of destination priorities.

In certain embodiments, the transmission to the selected destination is in a shared COT. In some embodiments, a requirement for the transmission to the selected destination to be in a shared COT is configurable. In various embodiments, in response to multiple destinations of the plurality of destinations having the highest priority, the selected destination comprises one of the multiple destinations and the transmission to the selected destination is in a shared COT.

In one embodiment, the method 500 further comprises applying an offset value to a logical channel priority in response to the transmission to the selected destination being in a shared COT. In certain embodiments, the offset value comprises a configurable value.

In some embodiments, the offset value is a function of a packet delay budget of data in the logical channel. In various embodiments, the method 500 further comprises receiving a configuration indicating whether to apply an offset value to a logical channel priority in response to the transmission to the selected destination being in a shared COT.

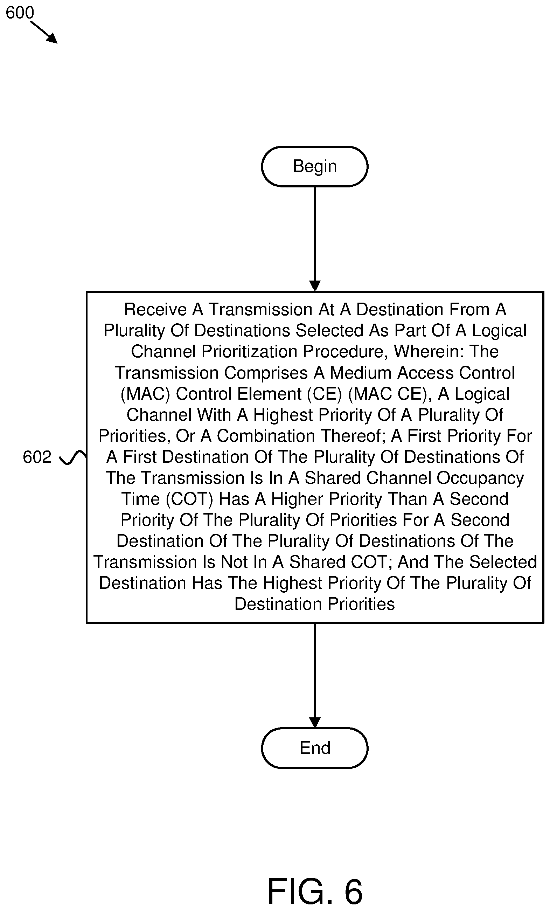

Figure 6 is a flow chart diagram illustrating another embodiment of a method 600 for selecting a destination as part of a LCP procedure. In some embodiments, the method 600 is performed by an apparatus, such as a network unit 104 or a remote unit 102. In certain embodiments, the method 600 may be performed by a processor executing program code, for example, a microcontroller, a microprocessor, a CPU, a GPU, an auxiliary processing unit, a FPGA, or the like.

In various embodiments, the method 600 includes receiving 602, at a network device or at a remote device, a transmission at a destination from a plurality of destinations selected as part of a LCP procedure. The transmission includes a MAC CE, a logical channel with a highest priority of a plurality of priorities, or a combination thereof; a first priority for a first destination of the plurality of destinations of the transmission is in a shared COT has a higher priority than a second priority of the plurality of priorities for a second destination of the plurality of destinations of the transmission is not in a shared COT; and the selected destination has the highest priority of the plurality of destination priorities.

In certain embodiments, the transmission is in a shared COT. In some embodiments, in response to multiple destinations of the plurality of destinations having the highest priority, the selected destination comprises one of the multiple destinations and the transmission is in a shared COT. In various embodiments, the method 600 further comprises transmitting a configuration indicating whether to apply an offset value to a logical channel priority in response to the transmission being in a shared COT.

In one embodiment, an apparatus comprises a processor of a UE that selects a destination from a plurality of destinations for a transmission as part of a LCP procedure, wherein: the transmission comprises a MAC CE, a logical channel with a highest priority of a plurality of priorities, or a combination thereof; a first priority for a first destination of the plurality of destinations of the transmission is in a shared COT has a higher priority than a second priority of the plurality of priorities for a second destination of the plurality of destinations of the transmission is not in a shared COT; and the selected destination has the highest priority of the plurality of destination priorities.

In certain embodiments, the transmission to the selected destination is in a shared COT.

In some embodiments, a requirement for the transmission to the selected destination to be in a shared COT is configurable.

In various embodiments, in response to multiple destinations of the plurality of destinations having the highest priority, the selected destination comprises one of the multiple destinations and the transmission to the selected destination is in a shared COT.

In one embodiment, the processor applies an offset value to a logical channel priority in response to the transmission to the selected destination being in a shared COT.

In certain embodiments, the offset value comprises a configurable value.

In some embodiments, the offset value is a function of a packet delay budget of data in the logical channel.

In various embodiments, the apparatus further comprises a receiver that receives a configuration indicating whether to apply an offset value to a logical channel priority in response to the transmission to the selected destination being in a shared COT.

In one embodiment, a method in a UE comprises selecting a destination from a plurality of destinations for a transmission as part of a LCP procedure, wherein: the transmission comprises a MAC CE, a logical channel with a highest priority of a plurality of priorities, or a combination thereof; a first priority for a first destination of the plurality of destinations of the transmission is in a shared COT has a higher priority than a second priority of the plurality of priorities for a second destination of the plurality of destinations of the transmission is not in a shared COT; and the selected destination has the highest priority of the plurality of destination priorities.

In certain embodiments, the transmission to the selected destination is in a shared COT.

In some embodiments, a requirement for the transmission to the selected destination to be in a shared COT is configurable.

In various embodiments, in response to multiple destinations of the plurality of destinations having the highest priority, the selected destination comprises one of the multiple destinations and the transmission to the selected destination is in a shared COT.

In one embodiment, the method further comprises applying an offset value to a logical channel priority in response to the transmission to the selected destination being in a shared COT.

In certain embodiments, the offset value comprises a configurable value.

In some embodiments, the offset value is a function of a packet delay budget of data in the logical channel.

In various embodiments, the method further comprises receiving a configuration indicating whether to apply an offset value to a logical channel priority in response to the transmission to the selected destination being in a shared COT.

In one embodiment, an apparatus comprises a receiver of a network device or of a remote device that receives a transmission at a destination from a plurality of destinations selected as part of a LCP procedure, wherein: the transmission comprises a MAC CE, a logical channel with a highest priority of a plurality of priorities, or a combination thereof; a first priority for a first destination of the plurality of destinations of the transmission is in a shared COT has a higher priority than a second priority of the plurality of priorities for a second destination of the plurality of destinations of the transmission is not in a shared COT; and the selected destination has the highest priority of the plurality of destination priorities.

In certain embodiments, the transmission is in a shared COT.

In some embodiments, in response to multiple destinations of the plurality of destinations having the highest priority, the selected destination comprises one of the multiple destinations and the transmission is in a shared COT.

In various embodiments, the apparatus further comprises a transmitter that transmits a configuration indicating whether to apply an offset value to a logical channel priority in response to the transmission being in a shared COT.

In one embodiment, a method in a network device or in a remote device comprises receiving a transmission at a destination from a plurality of destinations selected as part of a LCP procedure, wherein: the transmission comprises a MAC CE, a logical channel with a highest priority of a plurality of priorities, or a combination thereof; a first priority for a first destination of the plurality of destinations of the transmission is in a shared COT has a higher priority than a second priority of the plurality of priorities for a second destination of the plurality of destinations of the transmission is not in a shared COT; and the selected destination has the highest priority of the plurality of destination priorities.

In certain embodiments, the transmission is in a shared COT.

In some embodiments, in response to multiple destinations of the plurality of destinations having the highest priority, the selected destination comprises one of the multiple destinations and the transmission is in a shared COT.

In various embodiments, the method further comprises transmitting a configuration indicating whether to apply an offset value to a logical channel priority in response to the transmission being in a shared COT.

Embodiments may be practiced in other specific forms. The described embodiments are to be considered in all respects only as illustrative and not restrictive. The scope of the invention is, therefore, indicated by the appended claims rather than by the foregoing description.

## Claims

1. A User Equipment, UE, (102, 200, 402) for wireless communications, the UE (102, 200, 402) comprising:
at least one memory (204); and
at least one processor (202) coupled with the at least one memory (204) and configured to cause the UE (102, 200, 402) to:
select (502) a destination from a plurality of destinations for a transmission as part of a logical channel prioritization, LCP, procedure:
wherein a first priority for a first destination of the plurality of destinations for the transmission in a shared channel occupancy time, COT, has a higher priority than a second priority of a plurality of priorities for a second destination of the plurality of destinations for the transmission that is not in a shared COT;
wherein the transmission comprises one or more of a medium access control, MAC, control element, CE, MAC CE, or a logical channel with a highest priority of the plurality of priorities; and
wherein the selected destination has the highest priority of the plurality of priorities.

2. The UE (102, 200, 402) of claim 1, wherein the transmission to the selected destination is in the shared COT.

3. The UE (102, 200, 402) of claim 1, wherein a requirement for the transmission to the selected destination to be in the shared COT is configurable.

4. The UE (102, 200, 402) of claim 1, wherein, in response to multiple destinations of the plurality of destinations having the highest priority, the selected destination comprises one of the multiple destinations and the transmission to the selected destination is in the shared COT.

5. The UE (102, 200, 402) of claim 1, wherein the at least one processor (202) is configured to cause the UE (102, 200, 402) to apply an offset value to a logical channel priority in response to the transmission to the selected destination being in the shared COT.

6. The UE (102, 200, 402) of claim 1, wherein the at least one processor (202) is configured to cause the UE (102, 200, 402) to receive a configuration indicating whether to apply an offset value (102, 200, 402) to a logical channel priority in response to the transmission to the selected destination being in the shared COT.

7. A method (500) for wireless communication performed by a user equipment, UE, (102, 200, 402), the method comprising:
selecting (502) a destination from a plurality of destinations for a transmission as part of a logical channel prioritization, LCP, procedure:
wherein a first priority for a first destination of the plurality of destinations for the transmission in a shared channel occupancy time, COT, has a higher priority than a second priority of a plurality of priorities for a second destination of the plurality of destinations for the transmission that is not in a shared COT;
wherein the transmission comprises one or more of a medium access control, MAC, control element, CE, MAC CE, or a logical channel with a highest priority of the plurality of priorities; and
wherein the selected destination has the highest priority of the plurality of priorities.

8. The method of claim 7, wherein the transmission to the selected destination is in the shared COT.

9. The method of claim 7, wherein a requirement for the transmission to the selected destination to be in the shared COT is configurable.

10. The method of claim 7, wherein, in response to multiple destinations of the plurality of destinations having the highest priority, the selected destination comprises one of the multiple destinations and the transmission to the selected destination is in the shared COT.

11. The method of claim 7, further comprising receiving a configuration indicating whether to apply an offset value to a logical channel priority in response to the transmission to the selected destination being in the shared COT.

## Patentansprüche

1. Benutzergerät, UE, (102, 200, 402) für drahtlose Kommunikationen, wobei das UE (102, 200, 402) umfasst:
mindestens einen Speicher (204); und
mindestens einen Prozessor (202), der mit dem mindestens einen Speicher (204) gekoppelt und dazu konfiguriert ist, zu bewirken, dass das UE (102, 200, 402):
ein Ziel aus einer Mehrzahl von Zielen für eine Übertragung als Teil eines Vorgangs der logischen Kanalpriorisierung, LCP, auswählt (502):
wobei eine erste Priorität für ein erstes Ziel aus der Mehrzahl von Zielen für die Übertragung in einer gemeinsamen Kanalbelegungszeit, COT, eine höhere Priorität hat als eine zweite Priorität aus einer Mehrzahl von Prioritäten für ein zweites Ziel aus der Mehrzahl von Zielen für die Übertragung, die nicht in einer gemeinsamen COT liegt;
wobei die Übertragung eines oder mehrere von einem Steuerelement, CE, der Medienzugriffssteuerung, MAC, MAC CE, oder einem logischen Kanal mit einer höchsten Priorität der Mehrzahl von Prioritäten umfasst; und
wobei das ausgewählte Ziel die höchste Priorität der Mehrzahl von Prioritäten hat.

2. UE (102, 200, 402) nach Anspruch 1, wobei die Übertragung zum ausgewählten Ziel in der gemeinsamen COT liegt.

3. UE (102, 200, 402) nach Anspruch 1, wobei eine Anforderung, dass die Übertragung zum ausgewählten Ziel in der gemeinsamen COT liegen soll, konfigurierbar ist.

4. UE (102, 200, 402) nach Anspruch 1, wobei als Reaktion auf mehrere Ziele aus der Mehrzahl von Zielen, die die höchste Priorität haben, das ausgewählte Ziel eines der mehreren Ziele umfasst und die Übertragung zu dem ausgewählten Ziel in der gemeinsamen COT liegt.

5. UE (102, 200, 402) nach Anspruch 1, wobei der mindestens eine Prozessor (202) dazu konfiguriert ist, zu bewirken, dass das UE (102, 200, 402) als Reaktion darauf, dass die Übertragung zu dem ausgewählten Ziel in der gemeinsamen COT liegt, einen Offset-Wert auf eine logische Kanalpriorität anwendet.

6. UE (102, 200, 402) nach Anspruch 1, wobei der mindestens eine Prozessor (202) dazu konfiguriert ist, zu bewirken, dass das UE (102, 200, 402) eine Konfiguration empfängt, die anzeigt, ob als Reaktion darauf, dass die Übertragung an das ausgewählte Ziel in der gemeinsamen COT liegt, ein Offset-Wert (102, 200, 402) auf eine logische Kanalpriorität angewendet werden soll.

7. Verfahren (500) für drahtlose Kommunikation, das von einem Benutzergerät, UE, (102, 200, 402) durchgeführt wird, wobei das Verfahren umfasst:
Auswählen (502) eines Ziels aus einer Mehrzahl von Zielen für eine Übertragung als Teil eines Vorgangs der logischen Kanalpriorisierung, LCP,:
wobei eine erste Priorität für ein erstes Ziel aus der Mehrzahl von Zielen für die Übertragung in einer gemeinsamen Kanalbelegungszeit, COT, eine höhere Priorität hat als eine zweite Priorität aus einer Mehrzahl von Prioritäten für ein zweites Ziel aus der Mehrzahl von Zielen für die Übertragung, die nicht in einer gemeinsamen COT liegt;
wobei die Übertragung eines oder mehrere von einem Steuerelement, CE, der Medienzugriffssteuerung, MAC, MAC CE, oder einem logischen Kanal mit einer höchsten Priorität der Mehrzahl von Prioritäten umfasst; und
wobei das ausgewählte Ziel die höchste Priorität der Mehrzahl von Prioritäten hat.

8. Verfahren nach Anspruch 7, wobei die Übertragung zum ausgewählten Ziel in der gemeinsamen COT liegt.

9. Verfahren nach Anspruch 7, wobei eine Anforderung, dass die Übertragung zu dem ausgewählten Ziel in der gemeinsamen COT liegen soll, konfigurierbar ist.

10. Verfahren nach Anspruch 7, wobei als Reaktion darauf, dass mehrere Ziele aus der Mehrzahl von Zielen, die die höchste Priorität haben, das ausgewählte Ziel eines der mehreren Ziele umfasst und die Übertragung zu dem ausgewählten Ziel in der gemeinsamen COT liegt.

11. Verfahren nach Anspruch 7, ferner umfassend das Empfangen einer Konfiguration, die anzeigt, ob als Reaktion darauf, dass die Übertragung an das ausgewählte Ziel in der gemeinsamen COT liegt, ein Offset-Wert auf eine logische Kanalpriorität angewendet werden soll.

## Revendications

1. Équipement utilisateur, UE, (102, 200, 402) pour des communications sans fil, l'UE (102, 200, 402) comprenant :
au moins une mémoire (204) ; et
au moins un processeur (202) couplé à l'au moins une mémoire (204) et configuré pour amener l'UE (102, 200, 402) à :
sélectionner (502) une destination parmi une pluralité de destinations pour une transmission dans le cadre d'une procédure de priorisation de canaux logiques, LCP ;
dans lequel une première priorité pour une première destination de la pluralité de destinations pour la transmission dans un temps d'occupation de canal, COT, partagé a une priorité plus élevée qu'une seconde priorité d'une pluralité de priorités pour une seconde destination de la pluralité de destinations pour la transmission qui n'est pas dans un COT partagé ;
dans lequel la transmission comprend l'un ou plusieurs d'un élément de contrôle, CE, de contrôle d'accès au support, MAC, MAC CE, ou d'un canal logique avec une priorité la plus élevée de la pluralité de priorités ; et
dans lequel la destination sélectionnée a la priorité la plus élevée de la pluralité de priorités.

2. UE (102, 200, 402) selon la revendication 1, dans lequel la transmission à la destination sélectionnée est dans le COT partagé.

3. UE (102, 200, 402) selon la revendication 1, dans lequel une condition selon laquelle la transmission à la destination sélectionnée doit être dans le COT partagé est configurable.

4. UE (102, 200, 402) selon la revendication 1, dans lequel, en réponse au fait que plusieurs destinations de la pluralité de destinations ont la priorité la plus élevée, la destination sélectionnée comprend l'une des plusieurs destinations et la transmission à la destination sélectionnée est dans le COT partagé.

5. UE (102, 200, 402) selon la revendication 1, dans lequel l'au moins un processeur (202) est configuré pour amener l'UE (102, 200, 402) à appliquer une valeur de décalage à une priorité de canal logique en réponse au fait que la transmission à la destination sélectionnée est dans le COT partagé.

6. UE (102, 200, 402) selon la revendication 1, dans lequel l'au moins un processeur (202) est configuré pour amener l'UE (100, 200, 402) à recevoir une configuration indiquant s'il faut appliquer une valeur de décalage (102, 200, 402) à une priorité de canal logique en réponse au fait que la transmission à la destination sélectionnée est dans le COT partagé.

7. Procédé (500) pour une communication sans fil mis en œuvre par un équipement utilisateur, **UE,** (102, 200, 402), le procédé comprenant :
la sélection (502) d'une destination parmi une pluralité de destinations pour une transmission dans le cadre d'une procédure de priorisation de canaux logiques, LCP ;
dans lequel une première priorité pour une première destination de la pluralité de destinations pour la transmission dans un temps d'occupation de canal, COT, partagé a une priorité plus élevée qu'une seconde priorité d'une pluralité de priorités pour une seconde destination de la pluralité de destinations pour la transmission qui n'est pas dans un COT partagé ;
dans lequel la transmission comprend l'un ou plusieurs d'un élément de contrôle, CE, de contrôle d'accès au support, MAC, MAC CE, ou d'un canal logique avec une priorité la plus élevée de la pluralité de priorités ; et
dans lequel la destination sélectionnée a la priorité la plus élevée de la pluralité de priorités.

8. Procédé selon la revendication 7, dans lequel la transmission à la destination sélectionnée est dans le COT partagé.

9. Procédé selon la revendication 7, dans lequel une condition selon laquelle la transmission à la destination sélectionnée doit être dans le COT partagé est configurable.

10. Procédé selon la revendication 7, dans lequel, en réponse au fait que plusieurs destinations de la pluralité de destination ont la priorité la plus élevée, la destination sélectionnée comprend l'une des plusieurs destinations et la transmission à la destination sélectionnée est dans le COT partagé.

11. Procédé selon la revendication 7, comprenant en outre la réception d'une configuration indiquant s'il faut appliquer une valeur de décalage à une priorité de canal logique en réponse au fait que la transmission à la destination sélectionnée est dans le COT partagé.
